Europäisches Patentamt

European Patent Office

Office européen des brevets

(19)

(11) Veröffentlichungsnummer: **0 008 771**
**A1**

(12) **EUROPÄISCHE PATENTANMELDUNG**

(21) Anmeldenummer: **79103192.5**

(22) Anmeldetag: **29.08.79**

(51) Int. Cl.³: **G 03 B 27/72**

(30) Priorität: **07.09.78 IT 486078**

(43) Veröffentlichungstag der Anmeldung:
**19.03.80 Patentblatt 80/6**

(84) Benannte Vertragsstaaten:
**CH DE FR GB**

(71) Anmelder: **Durst AG Fabrik Fototechnischer Apparate**
**Gerbergasse 58**
**I-39100 Bozen(IT)**

(72) Erfinder: **Vinatzer, Alex**
**Angerweg 19**
**I-39042 Brixen(IT)**

(74) Vertreter: **Kapfinger, Wolfgang**
**c/o DURST AG Fabrik Fototechnischer Apparate**
**Köstlanstrasse 12**
**I-39042 Brixen (BZ)(IT)**

(54) Schaltungsanordnung zur Steuerung der Belichtungszeit bei fotografischen Vergrösserungsgeräten.

(57) Bei einer Schaltungsanordnung zur Steuerung der Belichtungszeit bei fotografischen Vergrößerungsgeräten mit veränderbarem Vergrösserungsfaktor mit einer Einrichtung zur Lichtmengenbestimmung ist ein lichtelektrischer Wandler (10) in einem festen Abstand zu einer Vorlagenebene des Vergrößerungsgerätes angeordnet. Ein Signalgenerator (20), der ein dem veränderbaren Vergrößerungsfaktor entsprechendes Signal erzeugt, steht mit der Einrichtung zur Lichtmengenbestimmung in einem derartigen Wirkzusammenhang, dass bei Änderung des Vergrößerungsmaßstabes eine Änderung der Belichtungszeit bewirkt wird. Die Schaltungsanordnung kann eine Einrichtung (12, 17, 18) zur Berücksichtigung des Schwarzschildeffektes enthalten.

Die Schaltungsanordnung ist für die Steuerung der Belichtungszeit in Schwarz-Weiß- und Farbkopierverfahren geeignet.

./...

Croydon Printing Company Ltd.

Fig. 1

- 1 -

## Schaltungsanordnung zur Steuerung der Belichtungszeit bei fotografischen Vergrößerungsgeräten.

Die Erfindung betrifft eine Schaltungsanordnung zur Steuerung der Belichtungszeit bei fotografischen Vergrößerungsgeräten mit einer einen lichtelektrischen Wandler enthaltenden Einrichtung zur Lichtmengenbestimmung, wobei der lichtelektrische Wandler in einem festen Abstand zu einer Vorlagenebene des Vergrößerungsgerätes angeordnet ist.

Bei bekannten Einrichtungen zur Steuerung der Belichtungszeit sind die zur Lichtmengenbestimmung eingesetzten lichtelektrischen Wandler in einem festen Abstand zur Vorlagenebene des Vergrößerungsgerätes und somit zur zu kopierenden Bildvorlage angeordnet. In dieser Lage, zumeist außerhalb des Belichtungsstrahlenganges, herrscht eine für den Betrieb der lichtelektrischen Wandler günstige Beleuchtungsstärke, bei der die von den Wandlern abgegebenen Signale einen Pegel erreichen, bei dem

- 2 -

sie ohne Notwendigkeit des Einsatzes allzu aufwendiger Schaltungsanordnungen verarbeitbar sind; ein solcher Aufwand könnte dann notwendig sein, wenn die Wandler in der Kopierebene angebracht wären. Die Anordnung der Wandler in der Nähe der Vorlagenebene bringt für einen großen Teil von Vergrößerungsgeräten mit automatischem Belichtungsablauf keinen Nachteil mit sich, da diese für den Abzug von Bildern konstanten Formats eingerichtet sind. Sollen die zu belichtenden Formate geändert werden, kann das entweder durch Einsatz von Objektiven geänderter Brennweite oder durch entsprechende Anpassung des Abstands zwischen Vorlagen- und Projektionsebene erreicht werden. In beiden Fällen muß die Belichtungsschaltung in der Regel an die neue Situation angepaßt werden. Dies geschieht zumeist durch Abstimmung eines eigenen Korrekturschaltkreises. Bei bekannten Vergrößerungsgeräten mit automatischem Belichtungsablauf, bei denen eine Änderung des Vergrößerungsmaßstabes durch Bewegung der Projektionsebene gegenüber der Vorlagenebene möglich ist, ist parallel zur Bewegungsrichtung der Projektionsebene in verschiedenen Abständen eine Reihe von numerierten Markierungen angebracht. Ein mit der Belichtungsschaltung verbundener Korrekturknopf kann eine Vielzahl mit den Markierungsnummern versehener Positionen einnehmen, die verschiedenen Kombinationen von Widerständen und Kondensatoren einer die Belichtungszeit beeinflussenden RC-Schaltung entsprechen. Die Bedienperson hat bei der Einstellung
des Vergrößerungsgerätes darauf zu achten, dass
der Korrekturknopf so positioniert ist, dass die
dessen Lage bestimmende Markierungsnummer mit
der der Projektionsebene zugeordneten übereinstimmt. Die RC-Kombination in der Schaltung berücksichtigt dann die durch Änderung des Vergrößerungsfaktors notwendige Änderung der Belichtungszeit. Die Zuordnung der verschiedenen
Parameter der RC-Schaltung zu den verschiedenen
Positionen der Projektionsebene erfolgt in der
Projektierungsphase des Gerätes in empirischer
Weise. Die Einrichtung ermöglicht also nur eine
stufenweise Anpassung der Belichtungszeiten an
den gewählten Vergrößerungsfaktor. Bei einer alle
praktischen Ansprüche erfüllenden Schaltungsanordnung muß also eine gewisse Anzahl von Stufen vorgesehen werden, was die Herstellungskosten
des Gerätes stark beeinflußt. Überdies ist die
Bedienung des Vergrößerungsgerätes bei Maßstabsänderungen wegen des Ablesens der Markierung und
der Verstellung des Korrekturknopfes relativ zeitaufwendig und kann überdies zu Fehlbelichtungen
bei zu wenig sorgfältiger Arbeitsweise führen.

Der Erfindung liegt die Aufgabe zugrunde, eine
Schaltungsanordnung der eingangs genannten Art zu

- 4 -

schaffen, die eine kontinuierliche Anpassung des Belichtungsablaufs an geänderte Vergrößerungsmaßstäbe erlaubt und keinen Eingriff der Bedienperson zur Änderung von Schaltungs-Parametern erfordert.

Die Aufgabe wird durch die im Anspruch 1 gekennzeichnete Erfindung gelöst.

Durch die Erfindung kann der Einfluß des veränderbaren Vergrößerungsfaktors auf die Belichtungszeit berücksichtigt werden, ohne daß deshalb die vorteilhafte Lage des oder der lichtelektrischen Wandler in der Nähe der zu kopierenden Vorlage aufgegeben zu werden braucht. In einer Weiterbildung des Erfindungsgedankens wird die gefundene Lösung bei einer Schaltungsanordnung angewandt, bei der der bei Änderung der Belichtungszeit auftretende Schwarzschildeffekt berücksichtigt wird.

Weitere Vorteile und Merkmale der Erfindung ergeben sich aus den Unteransprüchen in Verbindung mit der Beschreibung eines Ausführungsbeispiels, das anhand von Zeichnungen im folgenden eingehend erläutert wird. Dabei zeigen:

Figur 1 eine schematische Darstellung der wesentlichen Schaltungs- und Funktionselemente einer erfindungsgemäßen Schaltungsanordnung;

Figur 2  eine Variante der Schaltungsanordnung von Fig. 1;

Figur 3  eine stark schematisierte Darstellung eines fotografischen Vergrößerungsgerätes, in dem die Schaltungsanordnung von Fig. 1 oder Fig. 2  verwendbar ist, mit feststehender Projektionsebene und einem Objektiv veränderbarer Brennweite;

Figur 4  eine stark schematisierte Darstellung eines fotografischen Vergrößerungsgerätes ähnlich Fig. 3, jedoch mit gegenüber der Vorlagenebene verschiebbarer Projektionsebene;

Figur 5  ein Diagramm zur Darstellung der Funktionsweise eines Teiles der in Fig. 1 und Fig. 2 dargestellten Schaltungsanordnung;

Figur 6  ein Diagramm ähnlich dem in Fig.5 für einen gegenüber dem darin dargestellten geänderten Funktionszustand.

Die noch näher zu beschreibende Schaltungsanordnung S ist Teil einer in einem fotografischen Vergrößerungsgerät mit veränderbarem Vergrößerungsmaßstab einsetzbaren Belichtungssteuerung. Derartige Vergrößerungsgeräte sind in den Figuren

- 6 -

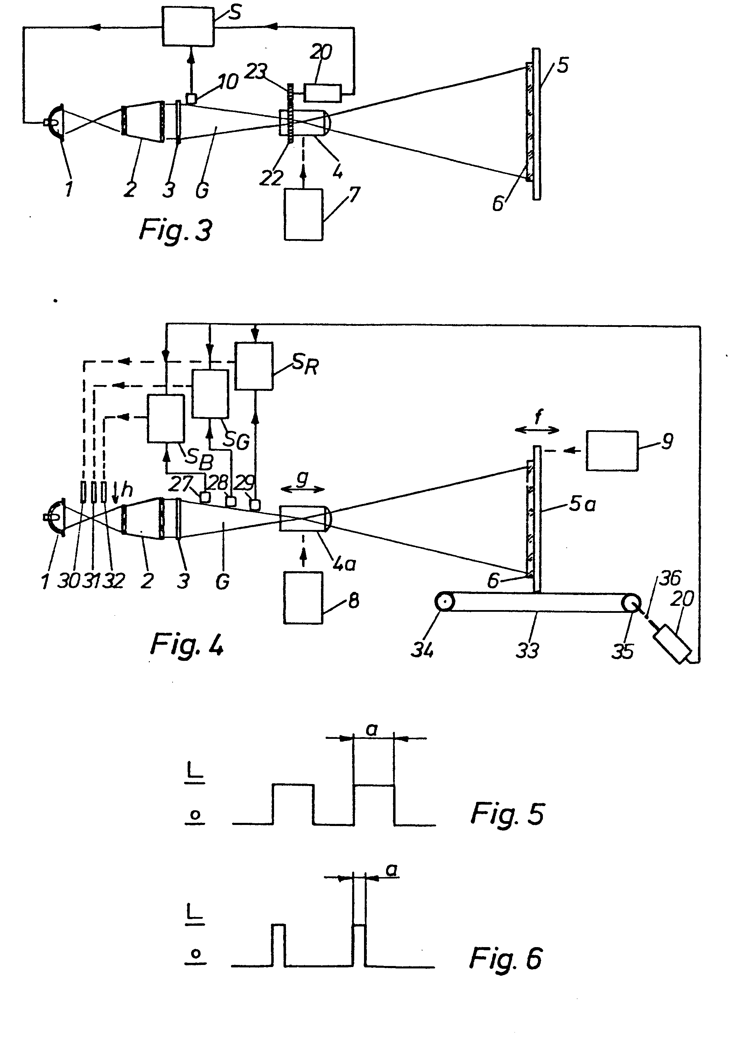

3 und 4 in schematischer Weise dargestellt: Beiden Figuren gemeinsam sind eine Lichtquelle mit angeformtem Reflektor 1, ein Lichtleitschacht 2 und eine in dessen Nähe angeordnete transparente Bildvorlage 3, die über ein Objektiv 4 beziehungsweise 4a auf ein auf einem Projektionstisch 5 bzw. 5a angeordnetes Kopiermaterial 6 projiziert wird. Die beiden dargestellten Vergrößerungsgeräte unterscheiden sich jedoch in der Art der Einstellbarkeit des Vergrößerungsmaßstabs und im Belichtungssystem. Beim in Figur 3 dargestellten Gerät wird die Veränderung des Vergrößerungsmaßstabes durch ein Objektiv 4 veränderbarer Brennweite bei fixem Abstand des Projektionstisches 5 von der Vorlagenebene erreicht. Die Brennweite ist dabei beispielsweise durch Drehung des Objektivs um dessen optische Achse mittels eines geeigneten Betätigungselements 7 veränderbar. Bei dem in Figur 4 dargestellten Vergrößerungsgerät wird die Veränderung des Vergrößerungsmaßstabes hingegen durch Verschieben des Projektionstisches 5a in Richtung der Pfeile f erzielt. Das Objektiv 4a fester Brennweite ist zur Scharfeinstellung des projizierten Bildes in Richtung der Pfeile g verstellbar. Die Verstellung des Objektivs beziehungsweise des Projektionstisches erfolgt über geeignete Betätigungsorgane 8 bzw. 9 .

Der Einfachheit halber wird zunächst die Schaltungsanordnung S für ein Schwarz-Weiß-Vergrösserungsgerät, wie in Figur 3 dargestellt, beschrieben: Ein in der Nähe der zu kopierenden Bildvorlage 3 außerhalb des abbildenden Strahlengangs G angeordneter lichtelektrischer Wandler, beispielsweise eine Fotodiode 10 ist über eine Teilschaltung 11 zur Einstellung des Formats der Bildvorlage und zur Kalibrierung und über einen periodisch unterbrechenden Schalter 12 mit dem invertierenden Eingang eines Operationsverstärkers 13 verbunden, in dessen Rückkoppelungskreis ein Kondensator 14 angeordnet ist. Dieser Kondensator ist durch eine einen Schalter 15 enthaltende Kurzschlußleitung 16 überbrückbar.

Der Schalter 12, der vorzugsweise ein elektronischer Schalter ist, unterbricht in Abhängigkeit eines periodischen Signals, das in einem Impulsgenerator 17 erzeugt wird. Das periodische Signal ist beispielsweise ein Rechtecksignal konstanter Frequenz und variabler Impulsbreite a, wie es beispielsweise in den Figuren 5 und 6 dargestellt ist. Dieses Signal wirkt auf den Schalter derart ein, dass dieser bei dem mit 0 bezeichneten Niveau geöffnet und bei dem mit L bezeichneten Niveau geschlossen ist. Je nach

- 8 -

Breite a des Impulses trägt der vom Fotoelement 1o
gelieferte Strom während eines Zyklus zur Aufladung des Kondensators 14 bei. Soll die Belichtungszeit ausgehend von einem bestimmten Wert zur
Berücksichtigung des Schwarzschildeffektes verlängert werden, ist dies durch eine Verringerung
der Impulsbreite a des Steuersignals des Schalters 12 erreichbar. Zu diesem Zweck ist der
Impulsgenerator 17 mit einem Funktionsgenerator
18 verbunden, in dem für jede Belichtung ein
monoton zunehmendes oder abnehmendes Signal erzeugt wird. Gute Ergebnisse wurden beispielsweise bei einem Signal B nach der Beziehung
$B = C \cdot e^{-\int t}$ (t=Zeit; C und $\int$ = Konstante) erzielt,
wobei C und in einer geeigneten, nicht näher
beschriebenen, Schaltungsanordnung zu Kalibrierzwecken veränderbar sind. Das nach dieser Beziehung erzeugte Signal B wirkt derart auf den Impulsgenerator 17 ein, dass bei höheren Werten von
B größere Impulsbreiten a erzielt werden. Weiters wurden gute Ergebnisse bei einem Signal B'
nach der Beziehung $B' = D(1-e^{-\gamma t})$ (t=Zeit; D und $\gamma$
= Konstante) erzielt. In diesem Falle ist die Situation umgekehrt und es werden bei geringeren Werten von B' größere Impulsbreiten a erzielt. Der
Funktionsgenerator 18 ist so geschaltet, dass bei
Beginn eines jeden neuen Belichtungszyklus das Signal
B bzw. B' mit dem Wert C bzw. Null neu beginnt.
Der Ausgang des Verstärkers 13 ist mit einem der

- 9 -

Eingänge eines Signalvergleichers 19 verbunden, dessen zweiter Eingang mit einem Signal beaufschlagt wird, das eine Funktion des Vergrößerungsfaktors K ist. Dieses Signal ist beispielsweise ein variables Spannungssignal, das durch den Abgriff eines Potentiometers 20, dessen Schleiferstellung ein Maß des Vergrößerungsfaktors ist, erzeugt und über einen Funktionsgenerator 21 zum zweiten Eingang des Signalvergleichers 19 geführt wird. Der Funktionsgenerator 21 ist vorzugsweise ein Quadrierglied, sodass das Quadrat des Vergrößerungsfaktors in der Vergleichsstufe 19 berücksichtigt wird. Dieser wird beispielsweise durch die Drehlage des Objektivs 4 variabler Brennweite dargestellt. Dieses ist beispielsweise mit einem Zahnkranz 22 versehen, mit dem ein mit einem Drehpotentiometer 20 verbundenes Zahnrad 23 kämmt. Durch Drehen des den Zahnkranz tragenden Teils des Objektivs 4 wird dessen Brennweite und somit auch der Vergrößerungsmaßstab geändert und durch die beschriebene Übertragung dieser Bewegung auf das Potentiometer ein dem Vergrößerungsfaktor entsprechendes Signal erhalten. Die beiden in der Vergleichsstufe 19 anstehenden Signale werden miteinander verglichen. Bei Gleichheit der Signale wird am Ausgang des Vergleichers 19 ein Signal erzeugt, das über eine Schaltstufe 24 die Schaltung der Lichtquelle 1 besorgt.
Die Schaltungsanordnung arbeitet folgendermaßen:
Vor Beginn eines jeden Belichtungszyklus ist der
Schalter 15 geschlossen und der Kondensator 14 somit entladen. Beim Start der Belichtung wird der
Schalter 15 geöffnet, während gleichzeitig der
Schalter 12 periodisch in Abhängigkeit des im
Signalgenerator 17 erzeugten Signals öffnet und
schließt. Der von der Fotodiode 10 kommende Strom,
der in einer im Teilkreis 11 enthaltenen Verstärkeranordnung entsprechend verstärkt sein kann,
lädt während der Zeiten, in denen der Schalter 12
geschlossen ist, den Kondensator 14 auf, wobei der
von der Fotodiode abgegebene Strom in einem linearen Zusammenhang mit dem auf diesen auftreffenden
Lichtstrom steht. Bei Beginn des Belichtungszyklus sind die Breiten a der den Schalter 12
steuernden Impulse am größten und nehmen mit fortlaufender Belichtungszeit monoton ab, sodass der
Schwarzschildeffekt berücksichtigt wird, der bei
Bildvorlagen höherer als einer Bezugsdichte längere Belichtungszeiten erforderlich macht als sie
durch das Reziprozitätsgesetz gegeben wären. Das
Signal am Ausgang des Verstärkers 13 steigt also
während der Belichtungsdauer an und wird mit dem
den Vergrößerungsfaktor darstellenden Signal im
Signalvergleicher 19 verglichen. Bei Gleichheit der Signale gibt dieser ein Signal ab, das in der Schaltstufe 24 die Abschaltung der Kopierlichtquelle bewirkt,
die beim Start des Belichtungszyklus eingeschaltet
wurde. Anstatt der Abschaltung der Kopierlichtquelle
kann durch die Schaltstufe 24 auch ein bei Belichtungsbeginn geöffneter Verschluß geschlossen oder bei
einem Farbkopierverfahren ein geeignetes Farbfilter
in den Kopierstrahlengang eingeführt werden. Wegen ihrer
Bekanntheit wurden die Funktionsgeneratoren 18 und 21
sowie die Schaltstufe 24 nicht näher beschrieben. Außerdem wurde aus demselben Grunde auf eine genaue Beschreibung eines mit dieser Schaltungsanordnung möglichen
Farbkopierverfahrens verzichtet. Diese wurde in sehr
schematischer Weise und ausschließlich mit Bezug auf
die zum Verständnis der Erfindung notwendigen Komponenten beschrieben.

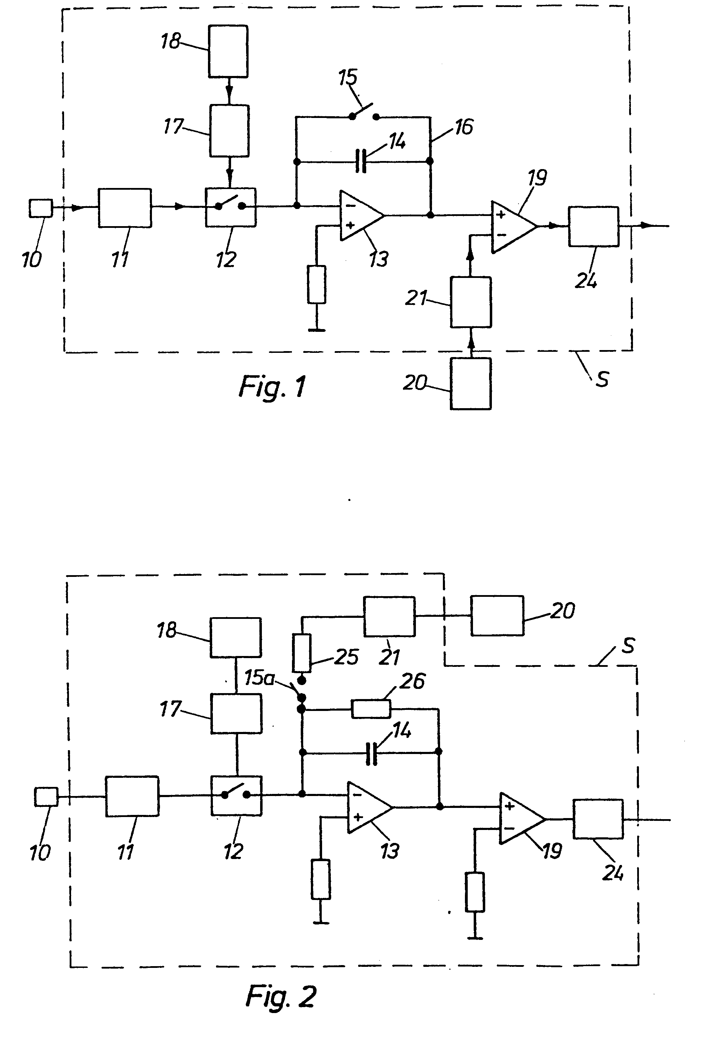

In Figur 2 ist eine Schaltungsvariante dargestellt,
bei der das den Vergrößerungsfaktor darstellende
und in einem Funktionsgenerator 21 veränderte Signal
nicht am zweiten Eingang einer Vergleichsstufe, sondern
über einen Widerstand 25 und einen vor Beginn des Belichtungszyklus geschlossenen und bei Einschaltungsbeginn der Lichtquelle geöffneten Schalter 15a am
Eingang des Verstärkers 13 anliegt, in dessen
Rückkopplungskreis ein Kondensator 14 und ein Widerstand 26 angeordnet sind. Dadurch ergibt sich beim
Start der Belichtung eine Startladung im Kondensator,
die vom eingestellten Vergrößerungsfaktor abhängig
ist. Das Ausgangssignal des Verstärkers 13 wird in
einer Vergleichsstufe 19 mit einem fixen Signal ver-

- 12 -

glichen. Im übrigen bleibt die Funktionsweise der Schaltungsanordnung gegenüber der beschriebenen unverändert.

Die beschriebene Schaltungsanordnung kann, wie schon erwähnt, nicht nur für die Steuerung eines Schwarz-Weiß-Vergrößerungsgerätes eingesetzt, sondern bei entsprechender, dem Fachmann geläufigen Änderung auch zur Steuerung einer Farbbelichtung verwendet werden. In Figur 4 ist der Einsatz für ein subtraktives Farbbelichtungsverfahren dargestellt, die Schaltungsanordnung ist jedoch auch für ein additives Belichtungsverfahren geeignet. In der Nähe der Bildvorlage 3 sind außerhalb des abbildenden Strahlengangs G drei lichtelektrische Wandler, beispielsweise Fotodioden 27, 28, 29 angeordnet, die je für eine der drei Grundfarben sensibilisiert sind, beispielsweise die Fotodiode 27 für die Farbe Blau, die Fotodiode 28 für die Farbe Grün und die Fotodiode 29 für die Farbe Rot. Die drei Fotodioden stehen mit jeweils einer Schaltungsanordnung SB, SG, SR in Verbindung, deren Aufbau und Funktionsweise mit der im Zusammenhang mit den Figuren 1 und 2 beschriebenen identisch ist. Jede dieser Schaltungsanordnungen steuert die Einführung eines subtraktiven Farbfilters 30, 31, 32 in den Strahlengang im Raum zwischen der Lichtquelle 1 und dem Lichtleitschacht 2. Beim Start der Belichtung befinden sich alle drei Farbfilter außerhalb des Strahlengangs und werden durch die Wirkung der Schaltungsanordnungen SB, SG, SR in Abhängigkeit der auf die drei Dioden 27, 28, 29 auffallenden Lichtmenge und des Vergrößerungsmaßstabes in Richtung des Pfeiles h mittels nicht dargestellter Betätigungsorgane in den Strahlengang eingeführt und unterbrechen je nach der den einzelnen Filtern zugeordneten Filterfarbe einen Teil des von der Lichtquelle abgestrahlten Lichtes. Beispielsweise ist die Filterfarbe des Filters 30 blau-grün, die des Filters 31 purpur und die des Filters 32 gelb. Der Vergrößerungsfaktor K wird durch die Stellung des Schleifers eines Drehpotentiometers 20 dargestellt, dessen Signal auf jede einzelne der drei Schaltungsanordnungen einwirkt. Wie schon erwähnt, hängt der Vergrößerungsfaktor K in diesem Anwendungsbeispiel von der Stellung des Projektionstisches 5a ab, die beispielsweise über einen Seilzug 33 auf zwei Spulen 34, 35 übertragen wird, wobei die Achse 36 der Spule 35 beispielsweise mit der Drehachse des Potentiometers 20 gekoppelt ist.

Wie schon aus der bisherigen Beschreibung ersichtlich ist, kann das System zur Veränderung des Vergrößerungsmaßstabes, wie es in Figur 3 dargestellt ist, auch im Belichtungssystem der Figur 4 Verwendung finden und umgekehrt.

- 14 -

Patentansprüche:

1. Schaltungsanordnung zur Steuerung der Belichtungszeit bei fotografischen Vergrößerungsgeräten mit einer einen lichtelektrischen Wandler enthaltenden Einrichtung zur Lichtmengenbestimmung, wobei der lichtelektrische Wandler in einem festen Abstand zu einer Vorlagenebene des Vergrößerungsgerätes angeordnet ist, dadurch gekennzeichnet, dass die Einrichtung zur Lichtmengenbestimmung mit einem den veränderbaren Vergrößerungsfaktor des Vergrößerungsgerätes berücksichtigenden Signalgenerator (20) in Wirkzusammenhang steht.

2. Schaltungsanordnung nach Anspruch 1, dadurch gekennzeichnet, dass die Einrichtung zur Lichtmengenbestimmung einen mit einem Eingang eines Signalvergleichers (19) verbundenen Kondensator (14) enthält und dass an einem zweiten Eingang des Signalvergleichers ein im Signalgenerator (20) erzeugtes, den veränderbaren Vergrößerungsfaktor des Vergrößerungsgerätes berücksichtigendes Signal anliegt, wobei bei einem bestimmten Verhältnis der am Signalvergleicher anliegenden Signale an dessen Ausgang ein das Belichtungsende bestimmendes Signal abgegeben wird.

3.  Schaltungsanordnung nach Anspruch 1,
    dadurch gekennzeichnet,
    dass die Einrichtung zur Lichtmengen-
    bestimmung einen mit dem Signalgenera-
    tor (20) verbundenen Kondensator (14)
    enthält.

4.  Schaltungsanordnung nach einem der vorhergehenden Ansprüche,
    dadurch gekennzeichnet,
    dass das den Vergrößerungsmaßstab berücksichtigende Signal eine Funktion dieses
    Maßstabs ist.

5.  Schaltungsanordnung nach Anspruch 4,
    dadurch gekennzeichnet,
    dass die Funktion im wesentlichen eine
    quadratische Funktion ist.

6.  Schaltungsanordnung nach einem der vorhergehenden Ansprüche,
    dadurch gekennzeichnet,
    dass der Vergrößerungsmaßstab durch ein an
    einem Potentiometer (20) abgegriffenes Signal
    berücksichtigt wird, wobei die Schleifer-
    stellung des Potentiometers vom veränder-
    baren Abstand zwischen der Objektiv- (4a)
    oder Vorlagenebene (3) und der Projektions-

- 16 -

ebene (5a) des Vergrößerungsgerätes abhängt.

7. Schaltungsanordnung nach einem der Ansprüche
1 bis 5,
dadurch gekennzeichnet,
dass der Vergrößerungsmaßstab durch ein an
einem Potentiometer (20) abgegriffenes Signal
berücksichtigt wird, wobei die Schleiferstellung des Potentiometers von der Brennweiteneinstellung eines Vergrößerungsobjektivs veränderbarer Brennweite (4) abhängt.

8. Schaltungsanordnung nach einem der vorhergehenden Ansprüche,
dadurch gekennzeichnet,
dass die Einrichtung zur Lichtmengenbestimmung
durch einen den lichtelektrischen Wandler
alternierend an- und abschaltenden Schalter
mit einstellbarem Schalttakt beeinflußbar ist
und dieser Schalttakt nach einer zeitlich
zunehmenden oder abnehmenden Funktion beeinflußt wird.

9. Schaltungsanordnung nach Anspruch 8,
dadurch gekennzeichnet,
dass die Funktion im wesentlichen durch die
mathematische Formel $C \cdot e^{-\int t}$ beschreibbar ist.

10. Schaltungsanordnung nach Anspruch 8,

- 17 -

dadurch gekennzeichnet,

dass die Funktion im wesentlichen durch die mathematische Formel $D(1-e^{-\gamma t})$

beschreibbar ist.

Fig. 1

Fig. 2

Fig. 3

Fig. 4

Fig. 5

Fig. 6

Europäisches
Patentamt

**EUROPÄISCHER RECHERCHENBERICHT**

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | DE - A1 - 2 364 914 (M. HEINZE) <br> * Ansprüche 1, 6, 7, 10 bis 12, 16; Fig. 1 bis 3 * <br> -- | 1,2,6 | G 03 B 27/72 |
| | US - A - 3 521 952 (R.H. NELSON et al.) <br> * Anspruch 1; Fig. 1 bis 3 * <br> -- | 1,2 | |
| | US - A - 2 921 498 (A. SIMMON et al.) <br> * Anspruch 7; Fig. 1, 3, 8 * <br> -- | 1 | RECHERCHIERTE SACHGEBIETE (Int. Cl.3) |
| | US - A - 3 790 789 (I. TAKAHASHI et al.) <br> * Fig. 2, 4 * <br> -- | 2 | G 03 B 27/00 |
| | DE - U - 1 906 846 (AGFA) <br> * Anspruch 1; Fig. 1, 2 * <br> -- | 1,6 | |
| | DE - A - 1 957 573 (MINOLTA CAMERA) <br> * Ansprüche 1 bis 5; Fig. 1, 3, 5, 7* <br> -- | 7 | |
| P | US - A - 4 113 378 (J.ST. WIRTZ) <br> * Anspruch 1, Spalte 2, Zeilen 28 bis 36; Fig. 1 * <br> -- | | KATEGORIE DER GENANNTEN DOKUMENTE |
| A | DE - A - 2 249 355 (EASTMAN KODAK) <br> * Ansprüche 1, 2, 5, Seiten 9 bis 10; Fig. 3, 4 * <br> ---- | | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument |

| X | Der vorliegende Recherchenbericht wurde für alle Patentansprüche erstellt. | &: Mitglied der gleichen Patent-familie, übereinstimmendes Dokument |
|---|---|---|

| Recherchenort <br> Berlin | Abschlußdatum der Recherche <br> 17-12-1979 | Prüfer <br> HOPPE |
|---|---|---|

EPA form 1503.1 06.78